Europäisches Patentamt

European Patent Office

Office européen des brevets

(11) Publication number: **0 228 229**

**A2**

# (12) EUROPEAN PATENT APPLICATION

(21) Application number: 86309770.5

(22) Date of filing: 15.12.86

(51) Int. Cl.⁴: **C08J 3/22** , C08K 5/00 , C08K 9/08 , C08L 23/08

(30) Priority: 14.12.85 GB 8530848

(43) Date of publication of application: 08.07.87 Bulletin 87/28

(84) Designated Contracting States: AT BE CH DE FR IT LI LU NL SE

(71) Applicant: BIP CHEMICALS LIMITED
20 St. Mary's Parsonage
Manchester M3 2NL(GB)

(72) Inventor: Eades, Alan Gordon
21 North Way Sedgley
Dudley West Midlands, DY3 3PH(GB)
Inventor: Parker, Frederick John
43 Beacon Road
Sutton Coldfield West Midlands, B73 5ST(GB)
Inventor: Webb, Ann
1 St. Thomas Close
Comberton Cambridge(GB)

(74) Representative: Newman, Dennis Daniel Ernest et al
Trafford Park P.O. Box 20 Ashburton Road West
Manchester, M17 1RA(GB)

(54) Thermoplastic moulding compositions.

(57) In a method of incorporating solid lubricant such as a metallic stearate in a thermoplastic composition mouldable by injection, the lubricant is added in the form of a dispersion in particles of a thermoplastic polymer different from that which forms the thermoplastic basis of the composition. The 'different' thermoplastic polymer may be an impact strength improver for the base thermoplastic polymer, or one which improves the flow properties of the composition in the molten state. The procedure is specially appliable to the preparation of nylon-type polyamide moulding compositions.

## Thermoplastic moulding compositions

This invention relates to thermoplastic moulding compositions.

It is common when moulding thermoplastic compositions by injection to include in them a solid lubricant (eg zinc stearate) to improve flow in the molten state or to act as a mould release agent. The manufacturer of a moulding composition will often compound a lubricant into the thermoplastic polymer which forms the basis of the composition, so that the composition (usually granular) which he supplies to the moulder is ready for use. However, the morphology of the base polymer is affected by the compounding operation, and this may result in a moulding which is more brittle. Furthermore, there is additional cost from the compounding operation; the exposure to heat and air which that operation involves affects the colour of the polymer; and different concentrations of lubricant are required to suit different applications.

The difficulties just outlined do not, of course, arise if the moulding composition manufacturer simply blends the lubricant with lubricant-free granules of moulding composition and supplied this blend to the moulder, as is sometimes done. However, problems then arise for the moulder, as follows:-

1. The blend is dusty, and this makes the working environment unhealthy.

2. The presence of the lubricant on the surface of the granules can cause slip in the screw of the injection machine, and so cause irregular feeding of the composition and non-uniform plasticisation of the polymer on which it is based.

3. If the lubricant is tacky, it accumulates on the blender walls. The product which the moulder receives from the manufacturer may therefore have an uncertain concentration of lubricant.

4. Because the lubricant is present only on the surface of the granules or outside them, it is less likely to become uniformly distributed during injection moulding. As a result, mouldings may have defective surfaces.

According to the present invention, there is provided a method of incorporating solid lubricant in a thermoplastic composition mouldable by injection, in which the lubricant is added in the form of a dispersion in particles of a thermoplastic polymer which improves the impact strength of articles injection-moulded from the compositions or improves the flow properties of the composition in the molten state.

Preferably, the thermoplastic polymer in which the lubricant is dispersed is elastomeric.

The solid lubricant, which may be any of those commonly employed in moulding (eg a metallic stearate such as that of calcium, magnesium or zinc; an organic derivative of stearic acid; or stearic acid itself), is included in the conventional proportion in the thermoplastic composition ie in an amount forming up to about 1% by weight. It may form 1-50% by weight of the particles in which it is present in dispersed form. At ambient temperature these particles are themselves solid, and are conveniently in the granular form which results from compounding the lubricant with the dispersant thermoplastic polymer in a conventional screw compounder. Alternatively, a high shear mixer or heated roll mill can be employed for compounding.

The thermoplastic polymer which forms the medium in which the lubricant particles are dispersed will usually be one which improves the impact strength of articles injection-moulded from the composition. However, especially when the composition contains fibrous reinforcement such as glass fibres or mineral filler such as talc, it may be one which improves the flow properties of the composition in the molten state. When applying the invention to the preparation of a moulding composition having a basis of a polyamide such as nylon 6 or nylon 66, the lubricant is preferably dispersed in an impact modifier for the polyamide, such as ethylene vinyl acetate or polyethylene.

The invention is further illustrated by the following Example.

### Example

75 parts by weight of an ethylene/vinyl acetate copolymer (molecular weight, 27 000; weight proportion ethylene to vinyl acetate = 85:15) were compounded with 25 parts by weight of the lubricant known as ethylene bis-stearamide (empirical formula $C_{38}H_{76}N_2O_2$; available from Abril Industrial Waxes Ltd). The compounder employed was of the single screw type, and the temperature employed was 148-150°C.

Nylon 6 (98 parts by weight) was blended with the lubricant/ thermoplastic polymer material (2 parts by weight) thus obtained. No dust was generated during blending. The blend was injection-moulded in a BIPEL 70/31 machine [barrel temperature: 240°C (feed) -255°C (nozzle); mould temperature, 60°C]. No screw-slip occurred during moulding. The mouldings obtained released easily from the mould, and had mechanical properties very similar to those made from applicants' well known nylon 6 moulding composition sold under the name BEETLE $^R$ MD2ST. In particular, they had good impact strength, with no visible surface defects.

## Claims

1. A method of incorporating solid lubricant in a thermoplastic composition mouldable by injection, in which the lubricant is in the form of a dispersion in particles of a thermoplastic polymer which improves the impact strength of articles injection-moulded from the composition or improves the flow properties of the composition in the molten state.

2. A method according to claim 1, in which the solid lubricant is stearic acid or a salt or other derivative thereof.

3. A method according to claim 1 or 2 in which the thermoplastic composition has a basis of a nylon polyamide.

4. A method according to claim 1, 2 or 3, in which the lubricant dispersion comprises solid lubricant particles of stearic acid or a salt or other derivative therof, dispersed in solid particles of the thermoplastic polymer, in proportion forming 1-50% and 99-50% respectively by weight of the dispersion.

5. A method according to any of claims 1 to 4, in which the thermoplastic polymer in which the solid lubricant is dispersed is a copolymer of ethylene and vinyl acetate.

6. A method according to claim 1, substantially as described with reference to the Example herein.